# EUROPEAN PATENT SPECIFICATION

(11) **EP 1 185 771 B1**
(45) Date of publication and mention of the grant of the patent: **24.03.2004**
(21) Application number: 00941074.7
(22) Date of filing: 08.06.2000
(51) Int. Cl.: F02D 33/02, F02D 35/02, F02D 41/06

(54) **METHOD OF REDUCING EMISSIONS IN THE EXHAUST GASES OF AN INTERNAL COMBUSTION ENGINE**
VERFAHREN ZUR ABGASREINIGUNG VON BRENNKRAFTMASCHINEN
PROCEDE DE REDUCTION D'EMISSIONS DES GAZ D'ECHAPPEMENT D'UN MOTEUR A COMBUSTION INTERNE

(30) Priority: 11.06.1999 SE 9902218
(43) Date of publication of application: 13.03.2002
(73) Proprietor: Volvo Personvagnar AB, 405 08 Göteborg (SE)
(72) Inventor: ALMKVIST, Göran, S-443 41 Grabo (SE); THORN, Karin, S-414 62 Gothenburg (SE)
(74) Representative: Hellbom, Lars Olof
(86) International application number: PCT/SE2000/001192
(87) International publication number: WO 2001/002709

(56) References cited:
- EP-A1- 0 727 574
- EP-A2- 0 874 151
- US-A- 4 501 240
- US-A- 5 614 809

## Description

The present invention relates to a method of reducing emissions in the exhaust gases of an internal combustion engine which comprises at least one cylinder to which an air/fuel mixture is supplied when a crankshaft of the internal combustion engine is to be made to rotate, at least one intake valve, at least one exhaust valve, and a piston reciprocating between a top dead-centre position and a bottom dead-centre position in the cylinder.

In internal combustion engines, it is desirable to reduce substances or emissions present in the exhaust gases of the internal combustion engine in order thus to reduce pollution of the surrounding environment and to satisfy legal requirements for internal combustion engines. Emissions present in the exhaust gases include inter alia carbon monoxide CO, hydrocarbon compounds HC and nitrogen oxides NOx.

In order to reduce these emissions in the exhaust gases, the internal combustion engine is provided with a catalytic converter which, by means of a chemical reaction, burns these undesirable emissions completely. The chemical reaction in the catalytic converter occurs only when the catalytic converter has reached a predetermined working temperature which is reached after a predetermined operating time of the internal combustion engine. When the engine is cold-started, there is therefore no reduction of the abovementioned undesirable emissions in the catalytic converter.

There are known arrangements which heat the catalytic converter when the internal combustion engine is cold-started for the purpose of rapidly reaching a desirable working temperature of the catalytic converter so as thus to make it possible to reduce the undesirable emissions in the exhaust gases of the internal combustion engine at an early stage. In such a known arrangement, an electric heating element is arranged in the catalytic converter. This arrangement makes the catalytic converter complicated and expensive to produce.

Internal combustion engines using starter generators are well known.

In a four-stroke engine a usual opening time for the exhaust valve(s) is 45°-60° before BDC.

Another problem which arises when internal combustion engines are cold-started is that a comparatively great amount of fuel in relation to the air supplied, that is to say a rich air/fuel mixture, has to be supplied to the internal combustion engine in order that the internal combustion engine will start and the internal combustion will be capable of working at an essentially constant speed during idle running. This rich air/fuel mixture is also supplied in order that the internal combustion engine will be ready to provide increased torque when the accelerator is operated. The operability of the internal combustion engine is thus ensured before the internal combustion engine has reached its operating temperature.

The absence of emission control in the catalytic converter and the rich air/fuel mixture result in the content of carbon monoxide CO, hydrocarbon compounds HC and nitrogen oxides NOx emitted from the internal combustion engine being high when the internal combustion engine is cold-started.

Attempts have previously been made tc reduce the quantity of fuel in relation to the air supplied, that is to say to run the internal combustion engine with a leaner air/fuel mixture when the internal combustion engine is cold-started. This has nevertheless led to the internal combustion engine working very unevenly when idling and also the operability of the internal combustion engine being poor. The reason why the speed varies during idle running is that the torque generated by the internal combustion engine is very sensitive to variations in the lambda value of the air/fuel mixture supplied to the cylinder space of the internal combustion engine when the air/fuel mixture is lean. The definition of the lambda value, or the excess air factor as it is also known, is the actual air quantity supplied divided by the air quantity theoretically necessary for complete combustion. If the lambda value is greater than 1, the air/fuel mixture is lean and, if the lambda value is smaller than one, the air/fuel mixture is rich.

The fuel supplied from a fuel injection valve can be controlled accurately by means of the fuel injection system of the internal combustion engine in order thus to obtain an essentially constant lambda value for the air/fuel mixture supplied. When the internal combustion engine is cold, however, fuel will condense on the comparatively cold walls in the intake duct and in the cylinder. The fuel condensed on the walls will be vaporized during idle running and accompany the air/fuel mixture which is flowing in the intake duct and being supplied to the cylinder space. If the vaporization of the fuel condensed on the walls is uneven, on account of pressure variations, temperature gradients, or the flow rate of the air/fuel mixture in the intake duct, a variation of the lambda value of the air/fuel mixture supplied to the cylinder space will occur.

As the torque generated by the internal combustion engine will vary during idle running when cold-started, the speed of the internal combustion engine will vary. In this connection, the speed of the internal combustion engine means the speed of rotation of the crankshaft of the internal combustion engine. When the speed varies, the pressure in the intake duct will also vary, which in turn leads to the vaporization of the condensed fuel varying, so that a variation of the lambda value of the air/fuel mixture supplied to the cylinder space occurs. The uneven speed of the internal combustion engine is thus intensified.

The object of the present invention is to reduce carbon monoxide CO, hydrocarbon compounds HC and nitrogen oxides NOx in exhaust gases from an internal combustion engine when cold-started.

Another object of the invention is to make it possible for an internal combustion engine to work with a lean air/fuel mixture.

A further object of the invention is to reach the working temperature of the catalytic converter as rapidly as possible.

This is achieved by a method of the type indicated in the introduction, which comprises the steps: an air/fuel mixture with a lambda value greater than 1 is supplied to the cylinder, an electric motor/generator connected to the crankshaft maintains an essentially constant predetermined speed of the crankshaft, and the exhaust valve is controlled so that it opens before the piston has passed the bottom dead-centre position.

By supplying an air/fuel mixture greater than 1 to the cylinder, the abovementioned undesirable emissions in the exhaust gases emitted from the internal combustion engine are reduced. By means of the combined electric motor/generator, the internal combustion engine will work at an essentially constant speed during idle running. By controlling the exhaust valve so that it opens before the piston has passed the bottom dead-centre position, the expansion stroke of the piston in the cylinder is interrupted, and very hot gases flow out through the exhaust duct and on to the catalytic converter which will thus be heated rapidly.

The invention is described in greater detail below by means of an exemplary embodiment shown in the appended drawings, in which
Fig. 1 shows a section through an internal combustion engine,
Fig. 2 shows a diagrammatic view of an internal combustion engine and an electric motor/generator for implementing the method according to the present invention,
Fig. 3 shows a diagram of the opening and closing times of exhaust valves, and
Fig. 4 shows a diagram of the heating time of the catalytic converter for a conventionally controlled internal combustion engine and an internal combustion engine controlled according to the method according to the present invention.

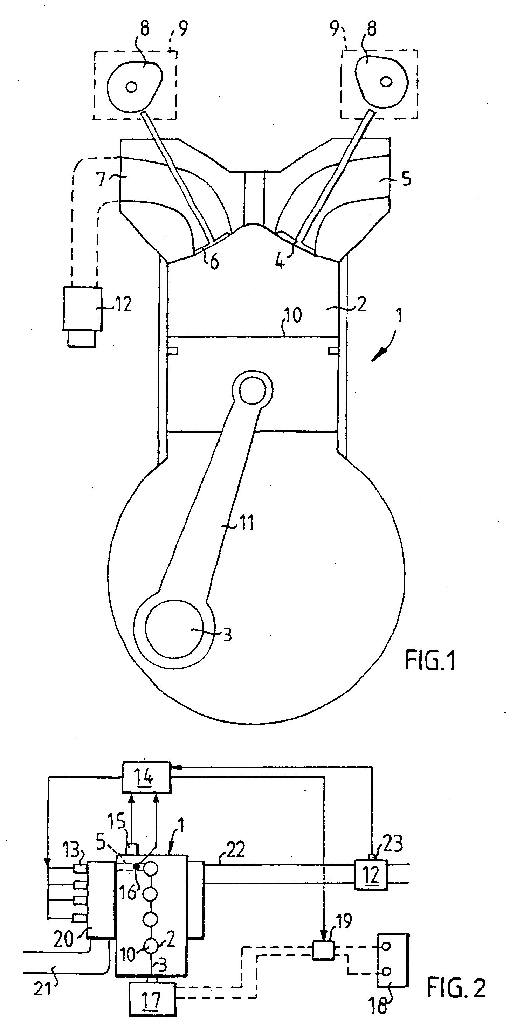

Fig. 1 shows an internal combustion engine 1 which comprises at least one cylinder 2 to which an air/fuel mixture is supplied when a crankshaft 3 of the internal combustion engine 1 is to be made to rotate. At least one intake duct 4 is arranged so as to open and close intake ducts 5 which are connected to the cylinder 2 and through which an air/fuel mixture is supplied when the engine 1 is working. At least one exhaust valve 6 is arranged so as to open and close exhaust ducts 7 which are connected to the cylinder 2 and through which burnt fuel in the form of exhaust gases is removed when the engine 1 is working. The internal combustion engine 1 also comprises control members 8 arranged so as to control the opening and closing of the intake and exhaust valves 4, 6. In the exemplary embodiment shown, the control members 8 consist of camshafts which can be adjustable so that the opening and closing time of the intake and exhaust valves 4, 6 can be varied. This is brought about by, for example, a regulating arrangement 9 which is shown diagrammatically in Fig. 1 and in a manner known per se rotates the camshafts hydraulically. Other control members 8 are also possible, such as electromagnetically controlled valves. A piston 10, which reciprocates between a top and a bottom dead-centre position in the cylinder 2, is mounted on the crankshaft 3 by means of a connecting rod 11. During operation of the internal combustion engine 1, exhaust gases flow from the cylinder 2 through the exhaust ducts 7 and on through a catalytic converter 12. The internal combustion engine 1 is preferably of the multi-cylinder four-stroke type.

Fig. 2 shows the internal combustion engine 1 diagrammatically. Fuel injection nozzles 13 controlled by a control unit 14 are provided for the intake ducts 5. The control unit 14 is also connected to a number of sensors 15 in the internal combustion engine 1, which sense the speed, temperature etc. of the internal combustion engine 1. It is also possible to arrange pressure sensors 16 in the intake ducts 5 in order to sense the pressure in the intake ducts 5. These pressure sensors 16 are connected to the control unit 14.

An electric motor/generator 17, which functions as an integrated starter motor and generator (ISG), is connected to the crankshaft 3 of the internal combustion engine 1. As an alternative to a direct connection of the electric motor/generator 17 to the crankshaft 3, a belt, chain or gear transmission, for example, can be used to connect the electric motor/generator 17 to the crankshaft 3. The electric motor/generator 17 is connected to a battery 18 via a control device 19. The control device 19 is connected to the control unit 14 and obtains information from the control unit 14 relating to how the electric motor/generator 17 is to be operated.

When the internal combustion engine 1 is in operation, air enters an intake branch pipe 20 via an air intake pipe 21. From the intake branch pipe 20, the air flows on to the intake ducts 5 where the air is mixed with fuel which is injected into the intake ducts 5 by means of the fuel injection nozzles 13. The air/fuel mixture then flows into the cylinders 2 and is ignited by at least one spark plug (not shown) arranged in each cylinder 2. Finally, the burnt air/fuel mixture in the form of exhaust gases flows out into the atmosphere through an exhaust system 22 connected to the internal combustion engine 1.

As explained in the introduction of the description, the burnt air/fuel mixture contains emissions which are undesirable. These emissions include carbon monoxide CO, hydrocarbon compounds HC and nitrogen oxides NOx. The exhaust gases are therefore treated in a catalytic converter 12 which is arranged in the exhaust system 22 and burns these emissions. However, the catalytic converter 12 functions only when it has reached a given working temperature, which takes place after a given heating time after the internal combustion engine 1 has been started. During cold-starting of the internal combustion engine 1, there is therefore no conversion of the abovementioned emissions in the catalytic converter 12.

The content of carbon monoxide CO, hydrocarbon compounds HC and nitrogen oxides NOx in the exhaust gases depends on inter alia the mixing ratio of the air/fuel mixture supplied to the cylinders 2. This mixing ratio is usually indicated by a lambda value. The definition of the lambda value, or the excess air factor as it is also known, is the actual air quantity supplied divided by the air quantity theoretically necessary. If the lambda value is greater than 1, the air/fuel mixture is lean and, if the lambda value is smaller than one, the air/fuel mixture is rich.

By means of supplying an air/fuel mixture with a lambda value greater than 1, that is to say a lean air/fuel mixture, to the cylinders when the internal combustion engine is cold-started, the content of hydrocarbon compounds HC in the exhaust gases can be considerably reduced. If a lean air/fuel mixture is -supplied to the internal combustion engine 1 when it is cold, that is to say when the internal combustion engine 1 has not reached its working temperature, problems of uneven speed during idle running arise for the reason explained in the introduction of the description.

The electric motor/generator 17 connected to the crankshaft 3 maintains an essentially constant predetermined speed of the crankshaft 3, which is brought about by virtue of the electric motor/generator 17 being controlled in order thus to control the speed of the internal combustion engine 1 in such a manner that when the speed of the internal combustion engine 1 exceeds a predetermined speed, the electric motor/generator 17 is controlled so that the speed of the internal combustion engine 1 decreases. The electric motor/generator 17 then works as a generator and thus reduces the speed of the internal combustion engine 1. When the speed of the internal combustion engine 1 falls below a predetermined speed, the electric motor/generator 17 is controlled so that the speed of the internal combustion engine 1 increases. The electric motor/generator 17 then works as an electric motor and thus increases the speed of the internal combustion engine 1. The sensor 15 senses the speed of the internal combustion engine 1 by, for example, sensing the speed of the crankshaft 3. The sensor 15 sends signals to the control unit 14 which processes these signals and then gives instructions to the control device 19 which define how the electric motor/generator 17 is to work.

It is also possible to control the electric motor/generator 17 so that the pressure in the intake ducts 5 is kept essentially constant. A pressure sensor 16 can be arranged in at least one of the intake ducts 5 in order to measure the pressure in the intake ducts 5. The pressure sensor 16 is connected to the control unit 14 of the internal combustion engine 1, which sends signals to a control device 19 intended for the electric motor/generator 17. By maintaining an essentially constant pressure in the intake ducts 5 by means of the electric motor/generator 17, an essentially constant speed of the internal combustion engine 1 can be obtained when the internal combustion engine 1 is cold and is run with an air/fuel mixture which is lean. The pressure in the intake ducts 5 is controlled by means of the electric motor/generator 17 connected to the crankshaft 3 in such a manner that, when the pressure in the intake ducts 5 exceeds a predetermined pressure, the electric motor/generator 17 drives the crankshaft 3 in order thus to reduce the pressure in the intake ducts 5 and, when the pressure in the intake ducts 5 falls below a predetermined pressure, the crankshaft 3 drives the electric motor/generator 17 in order thus to increase the pressure in the intake ducts 5.

When a cold internal combustion engine 1 is started, the catalytic converter 12 is also cold, as mentioned above. In order that the catalytic converter 12 is to be capable of effectively reducing the undesirable emissions in the exhaust gases of the internal combustion engine 1, the catalytic converter 12 must reach a given working temperature. Ignition of the air/fuel mixture supplied to the cylinder 2 is carried out at a crankshaft angle of 10° before to 20° after the top dead-centre position, preferably at a crankshaft angle of 0° - 10° after the top dead-centre position. By controlling the exhaust valve 6, as the method according to the present invention proposes, so that it opens before the piston 10 has passed the bottom dead-centre position during the expansion stroke, expansion is interrupted, and very hot exhaust gases will thus flow through the exhaust duct 7 and on to the catalytic converter 12. The catalytic converter 12 will therefore be heated very rapidly to the desired working temperature by the hot exhaust gases. It has been found that if the exhaust valve 6 is controlled so that it opens at a crankshaft angle of 90° - 130° after the top dead-centre position, preferably at a crankshaft angle of 100° after the top dead-centre position, the working temperature of the catalytic converter 12 will be reached very rapidly. A temperature sensor 23 can be arranged so as to sense the temperature of the catalytic converter 12 and send information about the temperature of the catalytic converter 12 to the control unit 14.

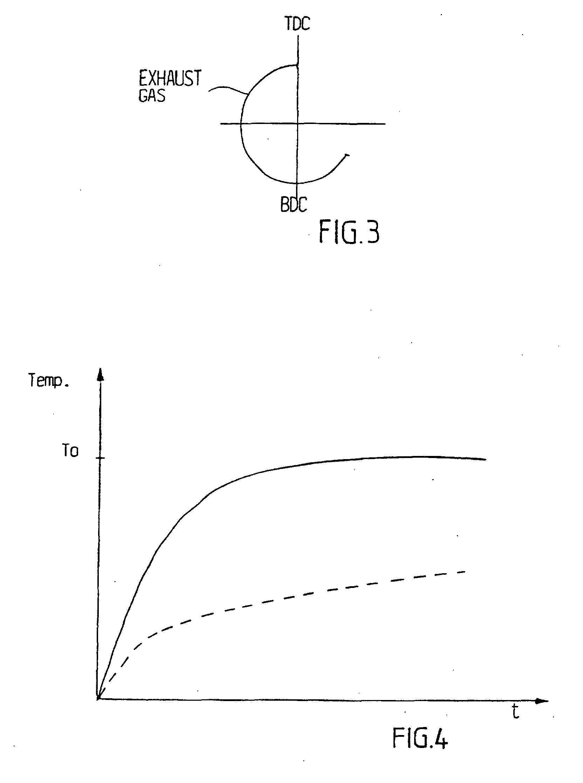

Fig. 3 shows a diagram of the opening and closing times of the exhaust valves. The opening time of the exhaust valve 6 will therefore be relatively long. In this connection, the crankshaft angle means the angle through which the crankshaft 3 has rotated since the piston 10 was located in the top dead-centre position. When the piston 10 is located in the top dead-centre position, the crankshaft angle is therefore zero.

The electric motor/generator 17 can be controlled so that it increases the speed of the internal combustion engine 1 beyond the speed which the internal combustion engine 1 itself produces. This means that the electric motor/generator 17 drives the internal combustion engine 1. Energy is thus supplied to the internal combustion engine 1, which results in the heat flow to the catalytic converter 12 increasing, so that the catalytic converter 12 is heated more rapidly.

Fig. 4 shows a diagram of the heating time of the catalytic converter 12 for a conventionally controlled internal combustion engine and an internal combustion engine 1 controlled according to the method according to the present invention. The solid curve in Fig. 3 relates to the heating time of the catalytic converter 12 for an internal combustion engine controlled according to the method according to the present invention, and the broken line relates to the heating time of the catalytic converter for a conventionally controlled internal combustion engine. As can be seen from the diagram in Fig. 4, the catalytic converter 12 of the internal combustion engine controlled according to the method according to the present invention will reach the working temperature To more rapidly than the catalytic converter of the engine controlled conventionally.

The internal combustion engine 1 can be supercharged by means of an exhaust turbo or a mechanical compressor (not shown). In a supercharged internal combustion engine 1, energy is supplied from the compressor or the turbo, so that the combustion temperature after expansion in the cylinder increases further. The catalytic converter can thus also be heated more rapidly.

## Claims

1. Method of reducing emissions in the exhaust gases of an internal combustion engine (1) which comprises at least one cylinder (2) to which an air/fuel mixture is supplied when a crankshaft (3) of the internal combustion engine (1) is to be made to rotate, at least one intake valve (4), at least one exhaust valve (6), and a piston (10) reciprocating between a top dead-centre position and a bottom dead-centre position in the cylinder (2), wherein the method comprises the following steps: an air/fuel mixture with a lambda value greater than 1 is supplied to the cylinder (2), an electric motor/generator (17) connected to the crankshaft (3) maintains an essentially constant predetermined speed of the crankshaft (3), and the exhaust valve (6) is controlled so that it opens before the piston (10) has passed the bottom dead-centre position.

2. Method according to Claim 1, **characterized in that** the exhaust valve (6) is controlled so that it opens at a crankshaft angle of 90° - 130° after the top dead-centre position, preferably at a crankshaft angle of 100° after the top dead-centre position.

3. Method according to Claim 1 or 2, **characterized in that** the electric motor/generator (17) connected to the crankshaft is controlled so that, when the speed of the internal combustion engine (1) exceeds a predetermined speed, the electric motor/generator (17) works as a generator and thus reduces the speed of the internal combustion engine (1) and, when the speed of the internal combustion engine (1) falls below a predetermined speed, the electric motor/generator (17) works as an electric motor and thus increases the speed of the internal combustion engine (1).

4. Method according to Claim 1 or 2, **characterized in that** the electric motor/generator (17) is controlled so that the electric motor/generator (17) drives the internal combustion engine (1) at a speed which is greater than the speed which the internal combustion engine (1) itself produces, which results in the heat flow to a catalytic converter (12) arranged in the internal combustion engine (1) increasing.

5. Method according to Claim 1 or 2, **characterized in that** the electric motor/generator (17) connected to the crankshaft (3) is controlled so that, when the pressure in at least one intake duct (5) connected to the cylinder (2) exceeds a predetermined pressure, the electric motor/generator (17) drives the crankshaft (3) and, when the pressure in the intake duct (5) falls below a predetermined pressure, the crankshaft (3) drives the electric motor/generator (17).

6. Method according to any one of the preceding claims, **characterized in that** the exhaust valve (6) is controlled so that the exhaust valve (6) closes when the piston (10) is located at the top dead-centre.

7. Method according to any one of the preceding claims, **characterized in that** ignition of the air/fuel mixture supplied to the cylinder (2) is carried out at a crankshaft angle of 10° before to 30° after the top dead-centre position, preferably at a crankshaft angle of 0° - 10° after the top dead-centre position.

8. Method according to any one of the preceding claims, **characterized in that** the lambda value of the air/fuel mixture supplied to the cylinder (2) lies essentially within the range 1.1 - 1.4 and preferably within the range 1.1 - 1.2.

9. Method according to any one of the preceding claims, **characterized in that** the method is used essentially when cold-starting the- internal combustion engine (1).

10. Method according to any one of the preceding claims, **characterized in that** adjustable control members (8) are arranged in the internal combustion engine (1) in order to control the opening and closing of the intake and exhaust valves (4, 6), so that the time of opening and closing of the intake and exhaust valves (4, 6) can be varied.

## Revendications

1. Procédé de réduction des émissions dans les gaz d'échappement d'un moteur à combustion interne (1) qui comprend au moins un cylindre (2) auquel un mélange air/carburant est fourni lorsqu'un vilebrequin (3) du moteur à combustion interne (1) doit être mis en rotation, au moins une soupape d'admission (4), au moins une soupape d'échappement (6), et un piston (10) alternant en va-et-vient entre une position de point mort haut et une position de point mort bas dans le cylindre (2), dans lequel le procédé comprend les étapes suivantes : un mélange air/carburant, avec une valeur de lambda supérieure à 1, est fourni au cylindre (2), un moteur/générateur électrique (17) connecté au vilebrequin (3) maintient une vitesse prédéterminée essentiellement constante du vilebrequin (3), et la soupape d'échappement (6) est commandée de telle façon qu'elle s'ouvre avant que le piston (10) ait passé la position de point mort bas.

2. Procédé selon la revendication 1, **caractérisé en ce que** la soupape d'échappement (6) est commandée de telle façon qu'elle s'ouvre à un angle du vilebrequin de 90° à 130° après la position de point mort haut, de préférence à un angle du vilebrequin de 100° après la position de point mort haut.

3. Procédé selon la revendication 1 ou 2, **caractérisé en ce que** le moteur/générateur électrique (17) connecté au vilebrequin est commandé de telle façon que, lorsque la vitesse du moteur à combustion interne (1) dépasse une vitesse prédéterminée, le moteur/générateur électrique (17) fonctionne comme un générateur et réduit alors la vitesse du moteur à combustion interne (1) et, lorsque la vitesse du moteur à combustion interne (1) tombe en dessous d'une vitesse prédéterminée, le moteur/générateur électrique (17) fonctionne comme un moteur électrique et accroît alors la vitesse du moteur à combustion interne (1).

4. Procédé selon la revendication 1 ou 2, **caractérisé en ce que** le moteur/générateur électrique (17) est commandé de telle façon que le moteur/générateur électrique (17) entraîne le moteur à combustion interne (1) à une vitesse qui est supérieure à la vitesse que le moteur à combustion interne (1) produit lui-même, ce qui a pour résultat d'augmenter le flux chaud fourni à un convertisseur catalytique (12) disposé dans le moteur à combustion interne (1).

5. Procédé selon la revendication 1 ou 2, **caractérisé en ce que** le moteur/générateur électrique (17) connecté au vilebrequin (3) est commandé de telle façon que, lorsque la pression dans au moins un conduit d'admission (5) connecté au cylindre (2) dépasse une pression prédéterminée, le moteur/générateur électrique (17) entraîne le vilebrequin (3) et, lorsque la pression dans le conduit d'admission (5) tombe en dessous d'une pression prédéterminée, le vilebrequin (3) entraîne le moteur/générateur électrique (17).

6. Procédé selon l'une quelconque des revendications précédentes, **caractérisé en ce que** la soupape d'échappement (6) est commandée de telle façon que la soupape d'échappement (6) se ferme lorsque le piston (10) se trouve au point mort haut.

7. Procédé selon l'une quelconque des revendications précédentes, **caractérisé en ce que** l'allumage du mélange air/carburant fourni au cylindre (2) est réalisé à un angle du vilebrequin de 10° à moins de 30° après la position de point mort haut, de préférence à un angle du vilebrequin de 0° à 10° après la position de point mort haut.

8. Procédé selon l'une quelconque des revendications précédentes, **caractérisé en ce que** la valeur lambda du mélange air/carburant fourni au cylindre (2) se situe essentiellement dans la plage allant de 1,1 à 1,4 et de préférence dans la plage allant de 1,1 à 1,2.

9. Procédé selon l'une quelconque des revendications précédentes, **caractérisé en ce que** le procédé est essentiellement utilisé lors du démarrage à froid du moteur à combustion interne (1).

10. Procédé selon l'une quelconque des revendications précédentes, **caractérisé en ce que** les éléments de commande ajustables (8) sont disposés dans le moteur à combustion interne (1) afin de commander l'ouverture et la fermeture des soupapes d'admission et d'échappement (4, 6), de telle sorte que la durée d'ouverture et de fermeture des soupapes d'admission et d'échappement (4,6) peut être variée.

## Patentansprüche

1. Verfahren zum Vermindern der Emissionen in den Abgasen eines Verbrennungsmotors (1), der mindestens einen Zylinder (2), zu welchem ein Luft-/Kraftstoffgemisch zugeführt wird, wenn eine Kurbelwelle (3) des Verbrennungsmotors (1) veranlasst wird, zu rotieren, mindestens ein Einlassventil (4), mindestens ein Auslassventil (6), und einen Kolben (10), der sich zwischen einer oberen Totpunktposition und einer unteren Totpunktposition in den Zylinder hin- und herbewegt, aufweist, wobei das Verfahren die folgenden Schritte aufweist: ein Luft-/Kraftstoffgemisch mit einem Lambdawert größer als 1 wird in den Zylinder (2) zugeführt, ein mit der Kurbelwelle (3) verbundener Elektromotor/Generator (17) hält eine im Wesentlichen konstante, vorbestimmte Geschwindigkeit der Kurbelwelle (3) aufrecht, und das Auslassventil (6) wird derart gesteuert, dass es öffnet, bevor der Kolben (10) die untere Totpunktposition passiert hat.

2. Verfahren nach Anspruch 1, **dadurch gekennzeichnet, dass** das Auslassventil (6) derart gesteuert wird, dass es bei einem Kurbelwellenwinkel von 90° bis 130° nach der oberen Totpunktposition, bevorzugt bei einem Kurbelwellenwinkel von 100° nach der oberen Totpunktposition, öffnet.

3. Verfahren nach Anspruch 1 oder 2, **dadurch gekennzeichnet, dass** der mit der Kurbelwelle verbundene Elektromotor/Generator (17) derart gesteuert wird, dass wenn die Geschwindigkeit des Verbrennungsmotors (1) eine vorbestimmte Geschwindigkeit überschreitet, der Elektromotor/Generator (17) als ein Generator arbeitet und somit die Geschwindigkeit des Verbrennungsmotors (1) vermindert, und wenn die Geschwindigkeit des Verbrennungsmotors (1) unterhalb eine vorbestimmte Geschwindigkeit fällt, der Elektromotor/Generator (17) als Elektromotor arbeitet und somit die Geschwindigkeit des Verbrennungsmotors (1) erhöht.

4. Verfahren nach Anspruch 1 oder 2, **dadurch gekennzeichnet, dass** der Elektromotor/Generator (17) derart gesteuert wird, dass der Elektromotor/Generator (17) den Verbrennungsmotor (1) bei einer Geschwindigkeit antreibt, die größer ist als die Geschwindigkeit, welche der Verbrennungsmotor (1) selbst erzeugt, was dazu führt, dass der Wärmestrom zu einem in dem Verbrennungsmotor (1) angeordneten Katalysator (12) ansteigt.

5. Verfahren nach Anspruch 1 oder 2, **dadurch gekennzeichnet, dass** der mit der Kurbelwelle verbundene Elektromotor/Generator (17) derart gesteuert wird, dass wenn der Druck in mindestens einer mit dem Zylinder (2) verbundenen Einlassleitung (5) einen vorbestimmten Druck überschreitet, der Elektromotor/Generator (17) die Kurbelwelle (3) antreibt, und wenn der Druck in der Einlassleitung (5) unterhalb einen vorbestimmten Druck fällt, die Kurbelwelle (3) den Elektromotor/Generator (17) antreibt.

6. Verfahren nach einem der vorhergehenden Ansprüche, **dadurch gekennzeichnet, dass** das Auslassventil (6) derart gesteuert wird, dass das Auslassventil (6) schließt, wenn der Kolben (10) im oberen Totpunkt gelegen ist.

7. Verfahren nach einem der vorhergehenden Ansprüche, **dadurch gekennzeichnet, dass** eine Zündung des in den Zylinder (2) zugeführten Luft-/Kraftstoffgemisch bei einem Kurbelwellenwinkel von 10° vor bis 30° nach der oberen Totpunktposition, bevorzugt bei einem Kurbelwellenwinkel von 0° bis 10° nach der oberen Totpunktposition, ausgeführt wird.

8. Verfahren nach einem der vorhergehenden Ansprüche, **dadurch gekennzeichnet, dass** der Lambdawert des zu dem Zylinder (2) zugeführten Luft-/Kraftstoffgemischs im Wesentlichen im Bereich von 1,1 bis 1,4, und bevorzugt im Bereich von 1,1 bis 1,2, liegt.

9. Verfahren nach einem der vorhergehenden Ansprüche, **dadurch gekennzeichnet, dass** das Verfahren im Wesentlichen beim Kaltstarten des Verbrennungsmotors (1) verwendet wird.

10. Verfahren nach einem der vorhergehenden Ansprüche, **dadurch gekennzeichnet, dass** einstellbare Steuerelemente (8) in dem Verbrennungsmotor (1) angeordnet sind, um das Öffnen und Schließen der Einlass- und Auslassventile (4, 6) derart zu steuern, dass die Zeit des Öffnens und Schließens der Einlass- und Auslassventile (4, 6) variiert werden kann.
